(19) Europäisches Patentamt
European Patent Office
Office européen des brevets

(11) Veröffentlichungsnummer: **0 053 751**
**B1**

(12) # EUROPÄISCHE PATENTSCHRIFT

(45) Veröffentlichungstag der Patentschrift: **29.08.84**

(51) Int. Cl.³: **C 09 B 26/06**, D 06 P 1/41

(21) Anmeldenummer: **81109833.4**

(22) Anmeldetag: **23.11.81**

(54) **Kationische Triazenfarbstoffe und ihre Verwendung.**

(30) Priorität: **05.12.80 DE 3045912**

(43) Veröffentlichungstag der Anmeldung: **16.06.82 Patentblatt 82/24**

(45) Bekanntmachung des Hinweises auf die Patenterteilung: **29.08.84 Patentblatt 84/35**

(84) Benannte Vertragsstaaten: **CH DE FR GB IT LI**

(56) Entgegenhaltungen:
**CH - A - 366 612**
**CH - A - 463 654**
**DE - B - 1 252 826**
**GB - A - 2 017 134**

(73) Patentinhaber: **BAYER AG, Konzernverwaltung RP Patentabteilung, D-5090 Leverkusen 1 Bayerwerk (DE)**

(72) Erfinder: **Fürstenwerth, Hauke, Dr., Morgengraben 3, D-5000 Köln 80 (DE)**

**EP 0 053 751 B1**

Anmerkung: Innerhalb von neun Monaten nach der Bekanntmachung des Hinweises auf die Erteilung des europäischen Patents im Europäischen Patentblatt kann jedermann beim Europäischen Patentamt gegen das erteilte europäische Patent Einspruch einlegen. Der Einspruch ist schriftlich einzureichen und zu begründen. Er gilt erst als eingelegt, wenn die Einspruchsgebühr entrichtet worden ist (Art. 99(1) Europäisches Patentübereinkommen).

BUNDESDRUCKEREI BERLIN

**Beschreibung**

Die vorliegende Erfindung betrifft kationische Triazenfarbstoffe der allgemeinen Formel

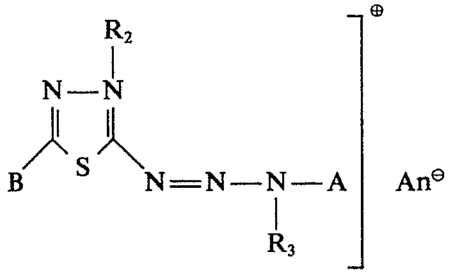

(I)

worin

B — Alkylmercapto, Arylmercapto oder einen Rest der Formel

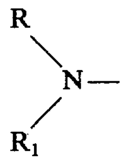

R — Wasserstoff, einen Alkyl-, Alkenyl-, Acyl-, Cycloalkyl-, Aryl-, Aralkyl-, Amino-, Alkylamino-, Dialkylamino-, Arylamino-, Aralkylamino- oder heterocyclischen Rest und
$R_1$ — Wasserstoff, einen Alkyl-, Alkenyl- oder Aralkylrest bedeuten, oder
R und $R_1$ — zu einem Heterocyclus verbunden sind,
$R_2$, $R_3$ — einen Alkyl-, Alkenyl-, Alkinyl- oder Aralkylrest oder einer der Reste $R_2$ oder $R_3$ auch Wasserstoff bedeuten, oder
$R_3$ — mit der o-Stellung von A verbunden ist,
A — einen Arylrest und
$An^{\ominus}$ — ein Anion bedeuten,

und worin die cyclischen und acyclischen Reste nichtionogene Substituenten und/oder eine Carboxylgruppe enthalten können.

Gegenstand der Erfindung ist außerdem die Verwendung der Farbstoffe I zum Färben und Bedrucken natürlicher und synthetischer Materialien.

Nichtionogene Substituenten im Sinne der vorliegenden Erfindung sind die in der Farbstoffchemie üblichen nicht dissoziierenden Substituenten, wie z. B. Cyan, Hydroxy, Halogen, wie Fluor, Chlor oder Brom, Nitro, Alkyl, Mono- und Dialkylamino, Phenyl, Alkoxy, Acyloxy, Alkoxycarbonyl, Alkoxycarbonyloxy, wobei Alkyl und Alkoxy vorzugsweise 1—4 C-Atome enthalten und Acyl insbesondere für $C_1$—$C_4$-Alkylcarbonyl steht.

Im Rahmen dieser Erfindung sind Alkylreste beispielsweise solche mit 1—8, insbesondere 1—4 C-Atomen.

Substituenten der Alkylreste R—$R_3$ sind beispielsweise Halogen, Hydroxy, $C_1$—$C_4$-Alkoxy, Phenyloxy, Benzyloxy, $C_1$—$C_4$-Alkoxycarbonyl, Carboxyl, Amidocarbonyl oder Cyan. Halogen steht vorzugsweise für Fluor, Chlor und Brom. Unter Alkenyl- und Alkinylresten werden insbesondere solche mit 2—5 C-Atomen verstanden.

Cycloalkyl steht z. B. für gegebenenfalls durch $C_1$—$C_4$-Alkyl substituiertes Cyclopentyl oder Cyclohexyl. Geeignete Acylreste sind z. B. $C_1$—$C_3$-Alkylcarbonyl, gegebenenfalls durch Halogen oder $C_1$—$C_4$-Alkyl substituiertes Benzoyl, $C_1$—$C_4$-Alkoxycarbonyl, Mono- und Di-$C_1$—$C_4$-alkylaminocarbonyl, Benzylaminocarbonyl, $C_1$—$C_4$-Alkylsulfonyl, Phenylsulfonyl oder Di-$C_1$—$C_4$-alkylaminosulfonyl.

Unter Aryl wird im allgemeinen Phenyl und unter Aralkyl Benzyl und $\beta$-Phenyl-$C_2$—$C_4$-alkyl verstanden. A kann außer für Phenyl z. B. auch für Naphthyl stehen. Die Phenyl- und Naphthylringe können durch beispielsweise 1—3 nichtionogene Reste wie Halogen, $C_1$—$C_4$-Alkyl, $C_1$—$C_4$-Alkoxy, $C_1$—$C_4$-Alkoxycarbonyl, Carboxyl, Amidocarbonyl, Cyan, Nitro, Amidosulfonyl, $C_1$—$C_3$-Alkylcarbonylamino, Benzoylamino, Hetaryl oder Arylazo substituiert sein. Unter Hetaryl wird dabei z. B. gegebenenfalls durch $C_1$—$C_4$-Alkyl oder $C_1$—$C_4$-Alkoxy substituiertes Benzthiazolyl oder 1,2,4-Oxidazolyl verstanden.

Die Reste R/$R_1$ können zusammen mit dem Stickstoffatom, an das sie gebunden sind, vorzugsweise einen 5- oder 6gliedrigen Ring wie Pyrrolidin, Piperidin, Morpholin, Piperazin, N-Methyl- oder N-Hydroxyethyl-piperazin bilden.

Wenn $R_3$ mit der o-Stellung von A verbunden ist, bildet es beispielsweise gemeinsam mit dem Stickstoffatom und A einen gegebenenfalls durch 1—4 $C_1$—$C_4$-Alkyl oder $C_1$—$C_4$-Alkoxy substituierten Dihydroindol-, Tetrahydrochinolin-, Tetrahydrochinoxalin- oder Tetrahydro-1,4-benzoxazinring.

Als anionische Reste kommen die für kationische Farbstoffe üblichen organischen und anorganischen Anionen in Betracht.

Bevorzugt sind farblose Anionen.

Das Anion ist im allgemeinen durch das Herstellungsverfahren und die eventuell vorgenommene Reinigung des rohen Farbstoffes gegeben. Im allgemeinen liegen die Farbstoffe als Halogenide (insbesondere als Chloride oder Bromide) oder als Methosulfate, Äthosulfate, Sulfate, Benzol- oder Toluolsulfonate oder als Acetate vor. Die Anionen können in bekannter Weise gegen andere Anionen ausgetauscht werden.

Bevorzugte Farbstoffe besitzen die allgemeine Formel

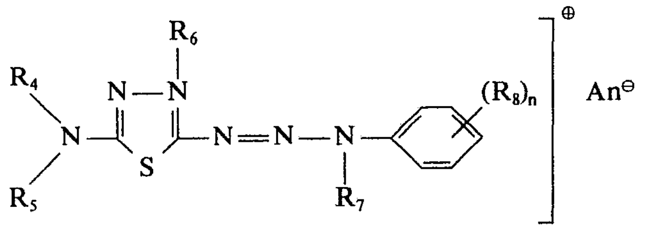

(II)

worin

| | |
|---|---|
| $R_4$ | Wasserstoff, einen gegebenenfalls durch Hydroxy, Halogen, Cyan, $C_1$—$C_4$-Alkoxy, Carboxyl, Aminocarbonyl oder $C_1$—$C_4$-Alkoxycarbonyl substituierten $C_1$—$C_8$-Alkylrest, einen $C_2$—$C_4$-Alkenylrest, einen gegebenenfalls durch $C_1$—$C_4$-Alkyl substituierten Cyclohexylrest, einen gegebenenfalls durch Halogen, $C_1$—$C_4$-Alkyl oder $C_1$—$C_4$-Alkoxy substituierten Phenyl-, Benzyl- oder Phenylethylrest, einen $C_1$—$C_4$-Alkyloxycarbonyl-, Mono- oder Di-$C_1$—$C_4$-alkylaminocarbonyl-, Aminocarbonyl-, Mono- oder Di-$C_1$—$C_4$-alkylaminosulfonyl-, Amino-, $C_1$—$C_4$-Alkylamino-, Di-($C_1$—$C_4$-alkyl)-amino-, einen gegebenenfalls durch $C_1$—$C_4$-Alkyl oder $C_1$—$C_4$-Alkoxy substituierten Phenylamino- oder Benzylamino-Rest, |
| $R_5$ | Wasserstoff, einen gegebenenfalls durch Hydroxy, Halogen, Cyan, $C_1$—$C_4$-Alkoxy, Carboxyl, Aminocarbonyl oder $C_1$—$C_4$-Alkoxycarbonyl substituierten $C_1$—$C_8$-Alkylrest, einen $C_2$—$C_4$-Alkenylrest oder einen gegebenenfalls durch Halogen, $C_1$—$C_4$-Alkyl oder $C_1$—$C_4$-Alkoxy substituierten Benzyl- oder Phenylethylrest, |
| $R_6$, $R_7$ | einen gegebenenfalls durch Hydroxy, Halogen, Cyan, $C_1$—$C_4$-Alkoxy, Carboxyl, Aminocarbonyl oder $C_1$—$C_4$-Alkoxycarbonyl substituierten $C_1$—$C_8$-Alkylrest, einen $C_2$—$C_4$-Alkenylrest oder einen gegebenenfalls durch Halogen, $C_1$—$C_4$-Alkyl oder $C_1$—$C_4$-Alkoxy substituierten Benzyl- oder Phenylethylrest, oder einer der Reste $R_6$ oder $R_7$ auch Wasserstoff, |
| $R_8$ | Wasserstoff, $C_1$—$C_4$-Alkyl, $C_1$—$C_4$-Alkoxy, Halogen, Nitro, Cyan, $C_1$—$C_4$-Alkylsulfonyl, Phenylsulfonyl, Acetylamino, Phenylazo, Benzthiazolyl oder 1,2,4-Oxdiazolyl, wobei die genannten cyclischen Reste durch $C_1$—$C_4$-Alkyl oder Phenyl substituiert sein können, worin $R_7$ mit der o-Stellung des Benzolringes verbunden sein kann und dann gemeinsam mit dem Benzolring und dem Stickstoffatom einen gegebenenfalls durch $C_1$—$C_4$-Alkyl oder $C_1$—$C_4$-Alkoxy substituierten Dihydroindol-, Tetrahydrochinolin-, Tetrahydrochinoxalin- oder Tetrahydro-1,4-benzoxazinring bildet, |
| n | 0—3 und |
| $An^\ominus$ | ein Anion bedeuten. |

Besonders bevorzugte Farbstoffe besitzen die Formel

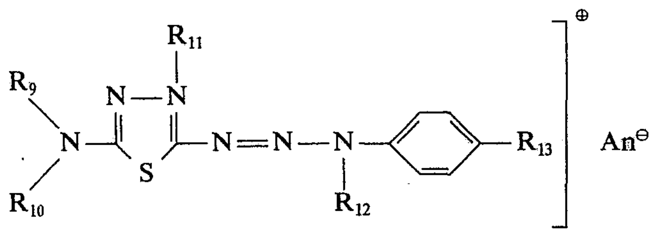

(III)

worin

$R_9$ H $-CH_3$ $-C_2H_5$ $-C_3H_7$ iso-$C_3H_7$ $-C_4H_9$ iso-$C_4H_9$ sek.-$C_4H_9$ tert.-$C_4H_9$

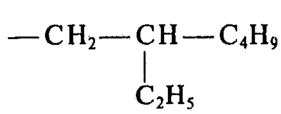

$—C_2H_4OH$ $—CH_2—CHOH—CH_3$ $—C_2H_4CN$ $—C_6H_{11}$ $—C_5H_9$
$—CH_2—C_6H_5$ $—C_6H_5$ $—C_6H_4Cl$ (p) $—C_6H_3Cl_2$ (2,5)
$—C_6H_4—CH_3$ (o, m, p) $—C_6H_4—OCH_3$ (p) $—C_2H_4—O—CH_3$
$—C_2H_4—O—C_2H_5$

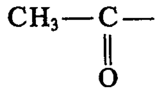

$R_{10}$ H $—CH_3$ $—C_2H_5$ $—C_3H_7$ iso-$C_3H_7$ $—C_4H_9$ iso-$C_4H_9$ sek.-$C_4H_9$
tert.-$C_4H_9$

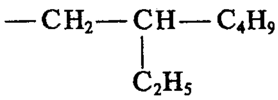

$—C_2H_4OH$ $—CH_2—CHOH—CH_3$ $—C_2H_4CN$ $—C_6H_{11}$ $—C_5H_9$
$—CH_2—C_6H_5$ $—C_2H_4—O—CH_3$ $—C_2H_4—O—C_2H_5$

$R_{11}$, $R_{12}$ Alkyl mit 1—4 C-Atomen, 2-Cyanethyl, 2-Carbamoylethyl, 2-Hydroxyethyl oder Benzyl,
$R_{13}$ H, Methyl, Ethyl, Methoxy, Ethoxy, Fluor, Chlor, Brom, Methylsulfonyl, Cyan, Nitro, 6-Methylbenzthiazolyl-2, Acetylamino, Phenylazo, und
$An^{\ominus}$ ein Anion

bedeuten.

Die Farbstoffe der Formel I lassen sich nach den für Triazenfarbstoffen üblichen Verfahren herstellen.

Die Farbstoffe der Formel I lassen sich auch durch Kuppeln diazotierter aromatischer Amine der Formel

$$A—NH_2 \qquad (VII)$$

auf Quartärsalze der Formel

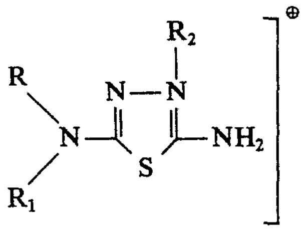 $An^{\ominus}$ (VIII)

bzw. auf Iminoverbindungen der Formel

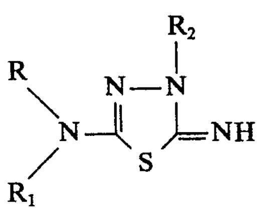 (IX)

und nachfolgende Umsetzung mit quaternierenden Mitteln der Formel

$$R_3—X \qquad (X)$$

herstellen.

Eine weitere Synthesemöglichkeit besteht in der Umsetzung von Triazenen der Formel

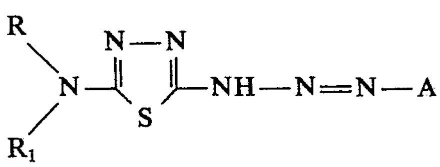 (XI)

oder

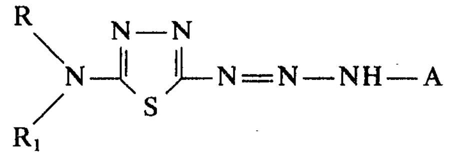

(XII)

mit Verbindungen der Formeln VI und X, wobei in den Formeln IV—XII die Reste R—$R_3$ und A die in der Formel I angegebene Bedeutung haben und X eine als Anion abspaltbare Gruppe bedeutet.

Die erfindungsgemäßen Farbstoffe eignen sich hervorragend zum Färben und Bedrucken von kationisch färbbaren Fasern aus Polymerisaten und Mischpolymerisaten des Acrylnitrils und des Dicyanethylens sowie von sauer modifizierten Fasern aus Polyamid und Polyester, wobei echte Farbtöne erhalten werden. Die Farbstoffe können auch Verwendung finden zum Färben und Bedrucken von Cellulosematerialien, z. B. Papier, von Seide und Leder. Sie sind weiter geeignet zur Herstellung von Schreibflüssigkeiten, Stempelwaren, Kugelschreiberpasten und lassen sich auch im Gummidruck verwenden.

Zum Färben mit den basischen Farbstoffen der allgemeinen Formel (I) eignen sich insbesondere Flocken, Fasern, Fäden, Bänder, Gewebe oder Gewirke aus Polyacrylnitril oder aus mindestens 85 % Acrylnitril-Anteil enthaltenden Mischpolymerisaten des Acrylnitrils mit anderen Vinylverbindungen, wie Vinylchlorid, Vinylidenchlorid, Vinylfluorid, Vinylacetat, Vinylpyridin, Vinylimidazol, Vinylalkohol, Acryl- und Methacrylsäureestern und -amiden, as. Dicyanethylen. Ebenso können Flocken, Fasern, Fäden, Bänder, Gewebe oder Gewirke aus sauer modifizierten synthetischen Materialien, insbesondere aus sauer modifizierten aromatischen Polyestern sowie sauer modifizierten Polyamidfasern hervorragend gefärbt werden. Sauer modifizierte aromatische Polyester sind beispielsweise Polykondensationsprodukte aus Sulfoterephthalsäure und Ethylenglykol, d. h. sulfonsäuregruppenhaltigen Polyethylenglykolterephthalaten, wie sie in der belgischen Patentschrift 549 179 und der USA-Patentschrift 2 893 816 beschrieben sind.

Das Färben kann aus schwach saurer Flotte erfolgen, wobei man in das Färbebad zweckmäßigerweise bei 40° bis 60°C eingeht und dann bei Kochtemperatur färbt. Man kann auch unter Druck bei Temperaturen über 100°C färben. Desweiteren lassen sich die Farbstoffe als Spinnlösungen zur Herstellung polyacrylnitrilhaltiger Fasern zusetzen oder auch auf die unverstreckte Faser aufbringen.

Die Färbungen der erfindungsgemäßen Farbstoffe der Formel I auf Materialien aus Polyacrylnitril oder sauer modifizierten Polyesterfasern oder Polyamidfasern zeichnen sich durch sehr gute Licht-, Naß-, Reib- und Sublimierechtheit und durch eine hohe Affinität zur Faser aus.

Auch zeichnen sie sich teilweise aus durch ein gutes Migriervermögen und eine geringe Rhodanidempfindlichkeit.

Die Farbstoffe können einzeln oder in Mischungen angewendet werden. Sie sind gut zum Färben von Formkörpern aus Polymerisaten oder Mischpolymerisaten des Acrylnitrils, as. Dicyanethylens, sauer modifizierten aromatischen Polyestern oder sauer modifizierten synthetischen Superpolyamiden in Chlorkohlenwasserstoffen als Färbebad geeignet, wenn sie die Löslichkeit in Chlorkohlenwasserstoff fördernde Substituenten, wie z. B. die tert.-Butylgruppe, tragen oder wenn das Anion $An^{\ominus}$ in der Formel (I) das Anion eines einbasischen organische Säure mit 4—30 Kohlenstoffatomen ist.

In CH-A-366 612 sind ähnliche Farbstoffe beschrieben. Die erfindungsgemäßen Farbstoffe weisen gegenüber diesen ein besseres Aufziehvermögen auf.

In den folgenden Beispielen bedeuten Teile Gewichtsteile und die Temperaturangaben sind Celsiusgrade.

## Beispiel 1

Eine aus 9,3 Teilen Anilin und Natriumnitrit in üblicher Weise hergestellte Diazoniumsalzlösung läßt man bei 0°—5° zu einer salzsauren Lösung von 2-Imino-3-methyl-5-dimethylamino-2,3-dihydro-1,3,4-thiadiazol fließen. Das Reaktionsgemisch wird durch Zutropfen von Natronlauge auf pH 7—8 eingestellt. Man rührt eine Stunde nach, saugt den Niederschlag ab, wäscht und trocknet ihn. Es werden so 25 Teile eines gelben Triazenfarbstoffes der Formel

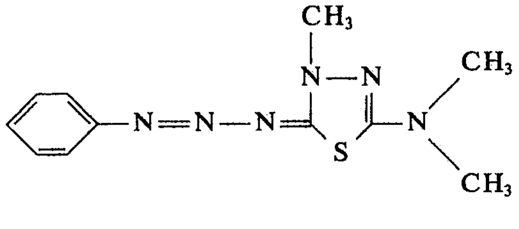

erhalten.

25 Teile der erhaltenen gelben Triazenverbindung werden in 400 Teilen Chlorbenzol gelöst und unter Rühren bei 70° mit 13 Teilen Dimethylsulfat versetzt. Man rührt 2 Stunden bei 70°, kühlt auf 20° ab und arbeitet in üblicher Weise auf. Man erhält nach dem Trocknen 29 Teile eines gelben Farbstoffes der Formel

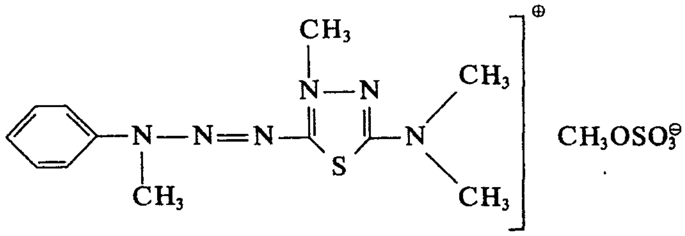

der Textilmaterialien aus Polyacrylnitril sowie andere mit kationischen Farbstoffen anfärbbare Textilmaterialien gelb mit hervorragenden Licht- und Naßechtheiten bei ausgezeichnetem Ziehverhalten und hoher Farbstärke sowie gutem Migriervermögen anfärbt.

Verfährt man wie in Beispiel 1 beschrieben, so erhält man unter Verwendung der in der Tabelle 1 angeführten Thiadiazol- und Anilinderivate nach Umsetzung mit Dimethylsulaft analoge Farbstoffe, die Polyacrylnitril mit ähnlichen Echtheiten in den angegebenen Farbtönen anfärben.

Tabelle 1

| Beispiel | Thiadiazolderivat | Anilinderivat | Farbton |
|---|---|---|---|
| 2 | 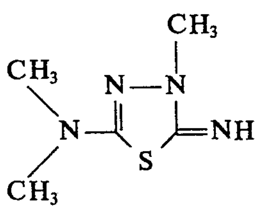 | 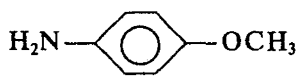 | gelb |
| 3 | desgl. | 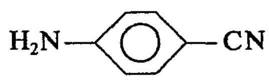 | gelb |
| 4 | desgl. | 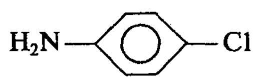 | gelb |
| 5 | desgl. | 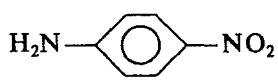 | goldgelb |
| 6 | desgl. | 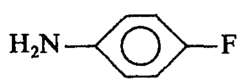 | gelb |
| 7 | desgl. | 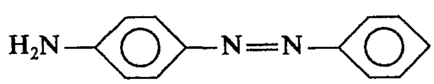 | gelborange |
| 8 | desgl. | 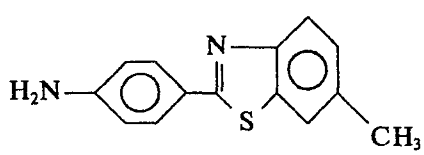 | gelb |
| 9 | 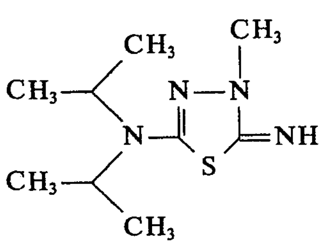 | 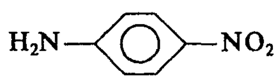 | goldgelb |
| 10 | desgl. | 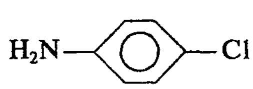 | gelb |

Fortsetzung

| Beispiel | Thiadiazolderivat | Anilinderivat | Farbton |
|---|---|---|---|
| 11 | 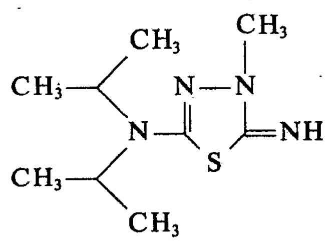 | 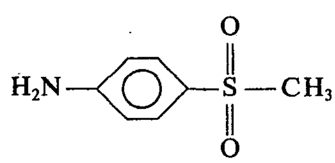 | gelb |
| 12 | desgl. | 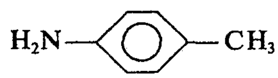 | gelb |
| 13 | 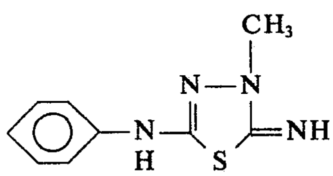 | 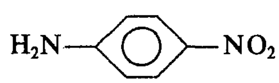 | goldgelb |
| 14 | desgl. | 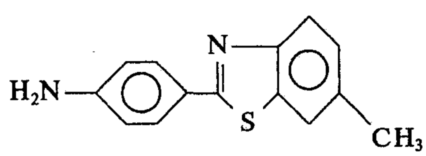 | gelb |
| 15 | 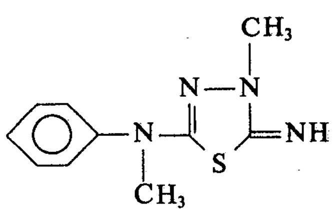 | 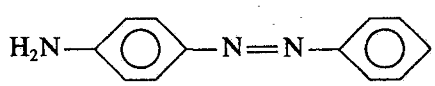 | orange |
| 16 | desgl. | 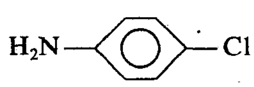 | gelb |

Beispiel 17

14,5 Teile 2-Amino-5-dimethylamino-1,3,4-thiadiazol werden in einer Mischung aus 10 Teilen Eis, 10 Teilen Essigsäure und 20 Teilen Schwefelsäure mit 7 Teilen Natriumnitrit gelöst in 20 Teilen Schwefelsäure bei 0–5° diazotiert. Die Lösung des Diazoniumsalzes gibt man zu einer salzsauren Lösung von 13 Teilen N-Methyl-p-toluidin. Mit Natronlauge wird der pH-Wert des Gemisches auf 4–5 eingestellt. Man rührt nach, isoliert den ausgefallenen Niederschlag und erhält nach dem Trocknen 26 Teile eines Triazens der Formel

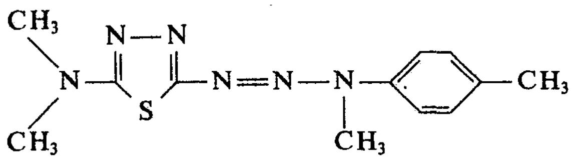

26 Teile dieses Triazens werden in 300 Teilen Chlorbenzol gelöst und bei 79° unter Rühren mit 14 Teilen Dimethylsulfat versetzt. Man rührt 1 Stunde bei 70° nach, kühlt auf 20° ab und erhält nach üblicher Aufarbeitung 32 Teile eines gelben Farbstoffes der Formel

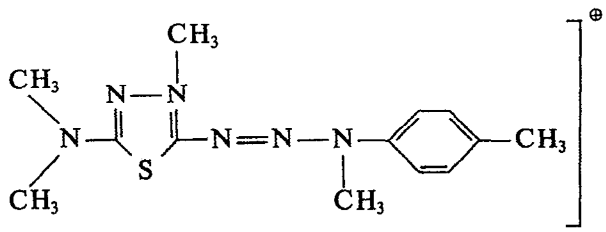

$CH_3OSO_3^{\ominus}$

der Acrylgewebe in hervorragenden Echtheiten gelb anfärbt.

Verfährt man wie in Beispiel 17 beschrieben, so erhält man unter Verwendung der in Tabelle 2 angeführten Thiadiazol- und Anilinderivate nach Umsetzung mit Dimethylsulfat analoge Farbstoffe, die Polyacrylnitril mit ähnlichen Echtheiten in den angegebenen Farbtönen anfärben.

Tabelle 2

| Beispiel | Thiadiazolderivat | Anilinderivat | Farbton |
|---|---|---|---|
| 18 | 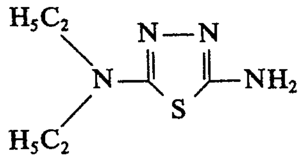 | 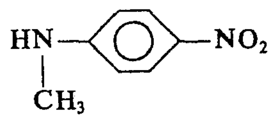 | goldgelb |
| 19 | desgl. | 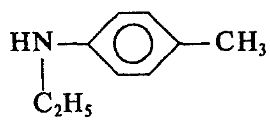 | gelb |
| 20 | desgl. | 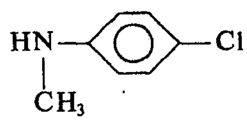 | gelb |
| 21 | 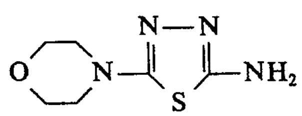 | 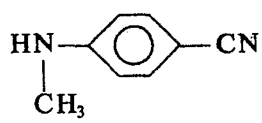 | gelb |
| 22 | desgl. | 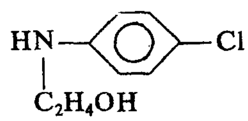 | gelb |
| 23 | desgl. | 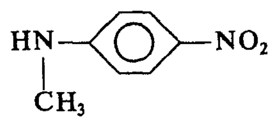 | goldgelb |
| 24 | 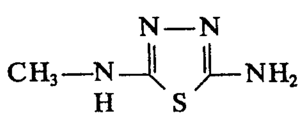 | 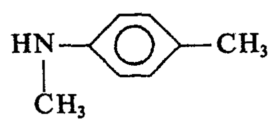 | gelb |
| 25 | desgl. | 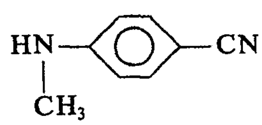 | gelb |
| 26 | desgl. | 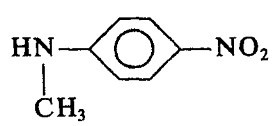 | gelb |

Fortsetzung

| Beispiel | Thiadiazolderivat | Anilinderivat | Farbton |
|---|---|---|---|
| 27 | 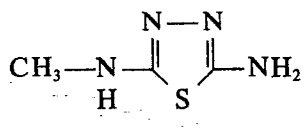 | 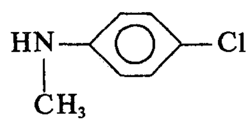 | gelb |
| 28 | 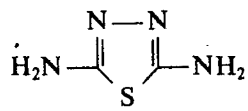 | 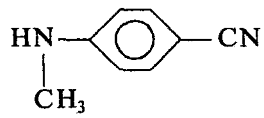 | gelb |
| 29 | desgl. | 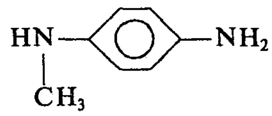 | gelb |
| 30 | desgl. | 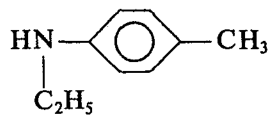 | gelb |
| 31 | desgl. | 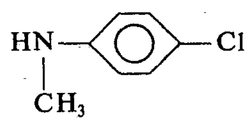 | gelb |

Beispiel 32

In eine aus 9,3 Teilen Anilin hergestellte Diazoniumsalzlösung werden bei 0°–5° 14 Teile 2-Amino-5-dimethylamino-1,3,4-thiadiazol eingetragen. Durch Zugabe von Natronlauge wird der pH-Wert der Mischung auf 8 gestellt. Man isoliert das Produkt, wäscht mit Wasser und verrührt die Reste in 200 Teilen Wasser. Nach Zusatz von 40 Teilen Dimethylsulfat und 4 Teilen Magnesiumoxid läßt man 6 Stunden bei 20° nachrühren. Anschließend wird 2 Stunden bei 70° gerührt, die Farbstofflösung geklärt und durch Zugabe von Kochsalz und Zinkchlorid der Triazenfarbstoff ausgesalzen. Nach üblicher Aufarbeitung und Trocknen erhält man 20 Teile eines Triazenfarbstoffes der Formel

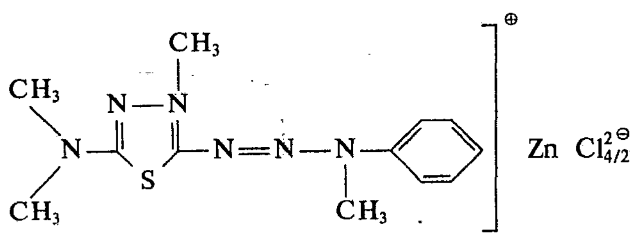

der Polyacrylnitril mit identischen Echtheiten zu dem in Beispiel 1 beschriebenen Farbstoff anfärbt.

Verfährt man wie in Beispiel 32 beschrieben, so erhält man unter Verwendung der in Tabelle 3 angeführten Thiadiazol- und Anilinderivate analoge Farbstoffe, die Polyacrylnitril mit ähnlichen Echtheiten in den angegebenen Farbtönen anfärben.

Tabelle 3

| Beispiel | Thiadiazolderivat | Anilinderivat | Farbton |
|---|---|---|---|
| 33 | 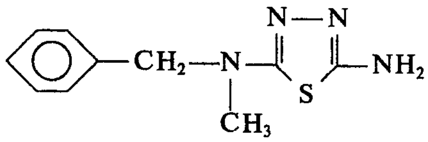 | 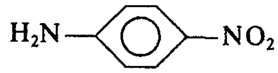 | goldgelb |
| 34 | 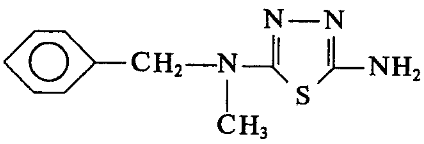 | 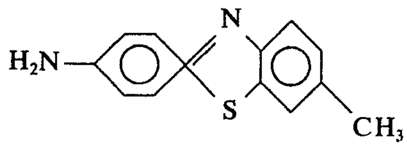 | gelb |
| 35 | 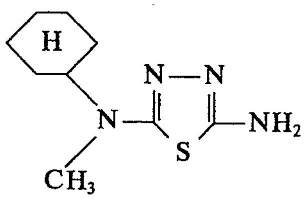 | 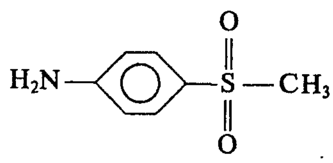 | gelb |
| 36 | desgl. | 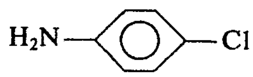 | gelb |
| 37 | 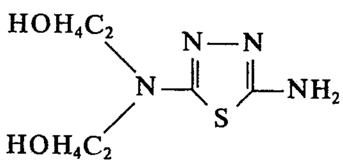 | 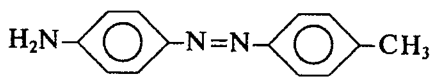 | gelborange |
| 38 | desgl. | desgl. | gelborange |
| 39 | 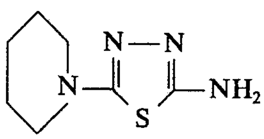 | 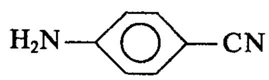 | gelb |
| 40 | desgl. | 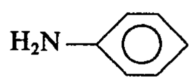 | gelb |
| 41 | 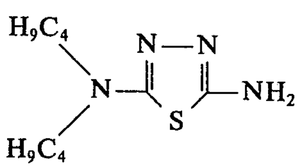 | 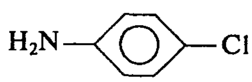 | gelb |
| 42 | desgl. | 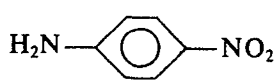 | gelb |
| 43 | 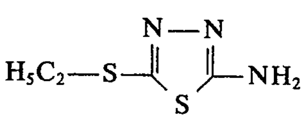 | desgl. | gelb |
| 44 | 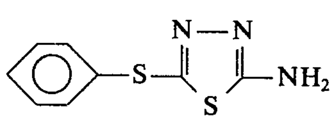 | desgl. | gelb |

**Patentansprüche**

1. Kationische Triazenfarbstoffe der allgemeinen Formel

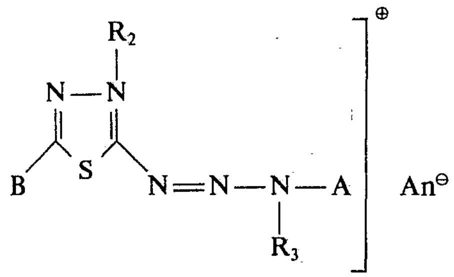

worin

B Alkylmercapto, Arylmercapto oder einen Rest der Formel

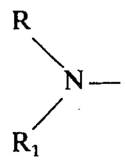

R Wasserstoff, einen Alkyl-, Alkenyl-, Acyl-, Cycloalkyl-, Aryl-, Aralkyl-, Amino-, Alkylamino-, Dialkylamino-, Arylamino-, Aralkylamino- oder heterocyclischen Rest und
$R_1$ Wasserstoff, einen Alkyl-, Alkenyl- oder Aralkylrest bedeuten, oder
R und $R_1$ zu einem Heterocyclus verbunden sind,
$R_2$, $R_3$ einen Alkyl-, Alkenyl-, Alkinyl- oder Aralkylrest oder einer der Reste $R_2$ oder $R_3$ auch Wasserstoff bedeuten, oder
$R_3$ mit der o-Stellung von A verbunden ist,
A einen Arylrest und
$An^{\ominus}$ ein Anion bedeuten,

und worin die cyclischen und acyclischen Reste nichtionogene Substituenten und/oder eine Carboxylgruppe enthalten können.

2. Kationische Triazenfarbstoffe gemäß Anspruch 1 der Formel

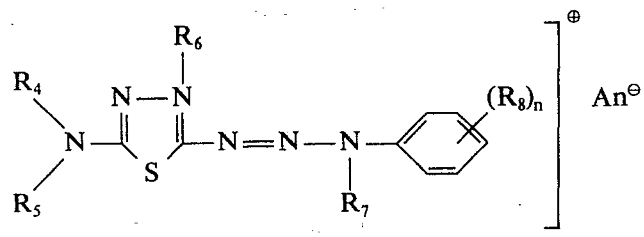

worin

$R_4$ Wasserstoff, einen gegebenenfalls durch Hydroxy, Halogen, Cyan, $C_1$—$C_4$-Alkoxy, Carboxyl, Aminocarbonyl oder $C_1$—$C_4$-Alkoxycarbonyl substituierten $C_1$—$C_8$-Alkylrest, einen $C_2$—$C_4$-Alkenylrest, einen gegebenenfalls durch $C_1$—$C_4$-Alkyl substituierten Cyclohexylrest, einen gegebenenfalls durch Halogen, $C_1$—$C_4$-Alkyl oder $C_1$—$C_4$-Alkoxy substituierten Phenyl-, Benzyl- oder Phenylethylrest, einen $C_1$—$C_4$-Alkyloxycarbonyl-, Mono- oder Di-$C_1$—$C_4$-alkylaminocarbonyl-, Aminocarbonyl-, Mono- oder Di-$C_1$—$C_4$-alkylaminosulfonyl-, Amino-, $C_1$—$C_4$-Alkylamino-, Di-($C_1$—$C_4$-alkyl)-amino-, einen gegebenenfalls durch $C_1$—$C_4$-Alkyl oder $C_1$—$C_4$-Alkoxy substituierten Phenylamino- oder Benzylamino-Rest,
$R_5$ Wasserstoff, einen gegebenenfalls durch Hydroxy, Halogen, Cyan, $C_1$—$C_4$-Alkoxy, Carboxyl, Aminocarbonyl oder $C_1$—$C_4$-Alkoxycarbonyl substituierten $C_1$—$C_8$-Alkylrest, einen $C_2$—$C_4$-Alkenylrest oder einen gegebenenfalls durch Halogen, $C_1$—$C_4$-Alkyl oder $C_1$—$C_4$-Alkoxy substituierten Benzyl- oder Phenylethylrest,
$R_6$, $R_7$ einen gegebenenfalls durch Hydroxy, Halogen, Cyan, $C_1$—$C_4$-Alkoxy, Carboxyl, Aminocarbonyl oder $C_1$—$C_4$-Alkoxycarbonyl substituierten $C_1$—$C_8$-Alkylrest, einen $C_2$—$C_4$-Alkenylrest oder einen gegebenenfalls durch Halogen, $C_1$—$C_4$-Alkyl oder $C_1$—$C_4$-Alkoxy substituierten Benzyl- oder Phenylethylrest, oder einer der Reste $R_6$ oder $R_7$ auch Wasserstoff,

$R_8$ Wasserstoff, $C_1-C_4$-Alkyl, $C_1-C_4$-Alkoxy, Halogen, Nitro, Cyan, $C_1-C_4$-Alkylsulfonyl, Phenylsulfonyl, Acetylamino, Phenylazo, Benzthiazolyl oder 1,2,4-Oxdiazolyl, wobei die genannten cyclischen Reste durch $C_1-C_4$-Alkyl oder Phenyl substituiert sein können, worin $R_7$ mit der o-Stellung des Benzolringes verbunden sein kann und dann gemeinsam mit dem Benzolring und dem Stickstoffatom einen gegebenenfalls durch $C_1-C_4$-Alkyl oder $C_1-C_4$-Alkoxy substituierten Dihydroindol-, Tetrahydrochinolin-, Tetrahydrochinoxalin- oder Tetrahydro-1,4-benzoxazinring bildet,

n 0–3 und

$An^{\ominus}$ ein Anion bedeuten.

3. Kationische Triazenfarbstoffe gemäß Anspruch 1 der Formel

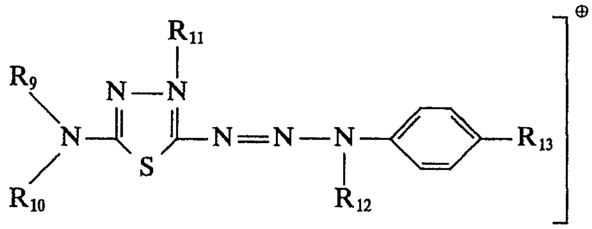 $An^{\ominus}$

worin

$R_9$ H $-CH_3$ $-C_2H_5$ $-C_3H_7$ iso-$C_3H_7$ $-C_4H_9$ iso-$C_4H_9$ sek.-$C_4H_9$ tert.-$C_4H_9$

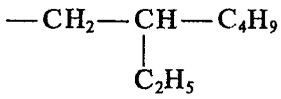

$-C_2H_4OH$ $-CH_2-CHOH-CH_3$ $-C_2H_4CN$ $-C_6H_{11}$ $-C_5H_9$

$-CH_2-C_6H_5$ $-C_6H_5$ $-C_6H_4Cl$ (p) $-C_6H_3Cl_2$ (2,5)

$-C_6H_4-CH_3$(o, m, p) $-C_6H_4-OCH_3$ (p) $-C_2H_4-O-CH_3$

$-C_2H_4-O-C_2H_5$

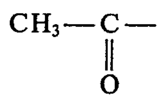

$R_{10}$ H $-CH_3$ $-C_2H_5$ $-C_3H_7$ iso-$C_3H_7$ $-C_4H_9$ iso-$C_4H_9$ sek.-$C_4H_9$ tert.-$C_4H_9$

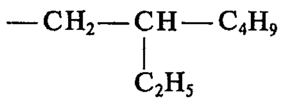

$-C_2H_4OH$ $-CH_2-CHOH-CH_3$ $-C_2H_4CN$ $-C_6H_{11}$ $-C_5H_9$

$-CH_2-C_6H_5$ $-C_2H_4-O-CH_3$ $-C_2H_4-O-C_2H_5$

$R_{11}$, $R_{12}$ Alkyl mit 1–4 C-Atomen, 2-Cyanethyl, 2-Carbamoylethyl, 2-Hydroxyethyl oder Benzyl,

$R_{13}$ H, Methyl, Ethyl, Methoxy, Ethoxy, Fluor, Chlor, Brom, Methylsulfonyl, Cyan, Nitro, 6-Methylbenzthiazolyl-2, Acetylamino, Phenylazo, und

$An^{\ominus}$ ein Anion

bedeuten.

4. Verfahren zum Färben und Bedrucken natürlicher und synthetischer Materialien, insbesondere von Fasern aus Polyacrylnitril und sauermodifizierten Polyestern und Polyamiden, dadurch gekennzeichnet, daß man Farbstoffe des Anspruchs 1 verwendet.

**Claims**

1. Cationic triazene dyestuffs of the general formula

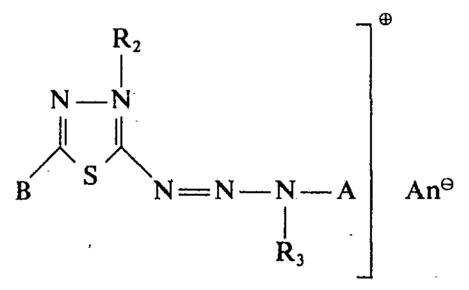

wherein

B denotes alkylmercapto, arylmercapto or a radical of the formula

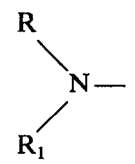

R denotes hydrogen or an alkyl, alkenyl, acyl, cycloalkyl, aryl, aralkyl, amino, alkylamino, dialkylamino, arylamino, aralkylamino or heterocyclic radical and
$R_1$ denotes hydrogen or an alkyl, alkenyl or aralkyl radical, or
R and $R_1$ are bonded to a heterocyclic structure,
$R_2$ and $R_3$ denote an alkyl, alkenyl, alkinyl or aralkyl radical, or one of the radicals $R_2$ or $R_3$ also denotes hydrogen, or
$R_3$ is bonded to the o-position of A,
A denotes an aryl radical and
$An^\ominus$ denotes an anion,

and wherein the cyclic and acyclic radicals can contain non-ionic substituents and/or a carboxyl group.

2. Cationic triazene dyestuffs, according to claim 1, of the formula

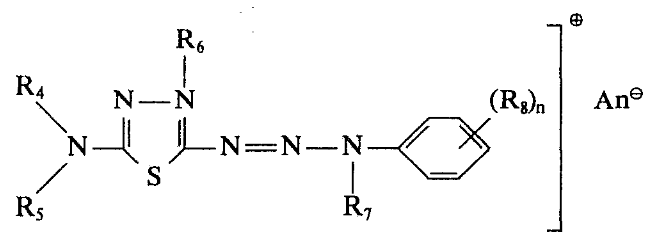

wherein

$R_4$ denotes hydrogen, a $C_1$—$C_8$-alkyl radical which is optionally substituted by hydroxyl, halogen, cyano, $C_1$—$C_4$-alkoxy, carboxyl, aminocarbonyl or $C_1$—$C_4$-alkoxycarbonyl, a $C_2$—$C_4$-alkenyl radical, a cyclohexyl radical which is optionally substituted by $C_1$—$C_4$-alkyl, a phenyl, benzyl or phenylethyl radical which is optionally substituted by halogen, $C_1$—$C_4$-alkyl or $C_1$—$C_4$-alkoxy, a $C_1$—$C_4$-alkyloxycarbonyl radical, a mono-$C_1$—$C_4$-alkylaminocarbonyl radical, a di-$C_1$—$C_4$-alkylaminocarbonyl radical, an aminocarbonyl radical, a mono-$C_1$—$C_4$-alkylaminosulphonyl radical, a di-$C_1$—$C_4$-alkylaminosulphonyl radical, an amino radical, a $C_1$—$C_4$-alkylamino radical, a di-($C_1$—$C_4$-alkyl)-amino radical, or a phenylamino or benzylamino radical which is optionally substituted by $C_1$—$C_4$-alkyl or $C_1$—$C_4$-alkoxy,
$R_5$ denotes hydrogen, a $C_1$—$C_8$-alkyl radical which is optionally substituted by hydroxyl, halogen, cyano, $C_1$—$C_4$-alkoxy, carboxyl, aminocarbonyl or $C_1$—$C_4$-alkoxycarbonyl, a $C_2$—$C_4$-alkenyl radical or a benzyl or phenylethyl radical which is optionally substituted by halogen, $C_1$—$C_4$-alkyl or $C_1$—$C_4$-alkoxy,
$R_6$ and $R_7$ denote a $C_1$—$C_8$-alkyl radical which is optionally substituted by hydroxyl, halogen, cyano, $C_1$—$C_4$-alkoxy, carboxyl, aminocarbonyl or $C_1$—$C_4$-alkoxycarbonyl, a $C_2$—$C_4$-alkenyl radical or a benzyl or phenylethyl radical which is optionally substituted by halogen, $C_1$—$C_4$-alkyl or $C_1$—$C_4$-alkoxy, or one of the radicals $R_6$ or $R_7$ also denotes hydrogen,
$R_8$ denotes hydrogen, $C_1$—$C_4$-alkyl, $C_1$—$C_4$-alkoxy, halogen, nitro, cyano, $C_1$—$C_4$-alkylsulphonyl, phenylsulphonyl, acetylamino, phenylazo, benzthiazolyl or 1,2,4-oxdiazolyl, it being possible for the stated cyclic radicals to be substituted by $C_1$—$C_4$-alkyl or phenyl,
and wherein $R_7$ can be bonded to the o-position of the benzene ring and then, together with

the benzene ring and the nitrogen atom, forms a dihydroindole-, tetrahydroquinoline-, tetrahydroquinoxaline- or tetrahydro-1,4-benzoxazine ring which is optionally substituted by $C_1$—$C_4$-alkyl or $C_1$—$C_4$-alkoxy,

n denotes 0—3 and

An$^{\ominus}$ denotes an anion,

3. Cationic triazene dyestuffs, according to claim 1, of the formula

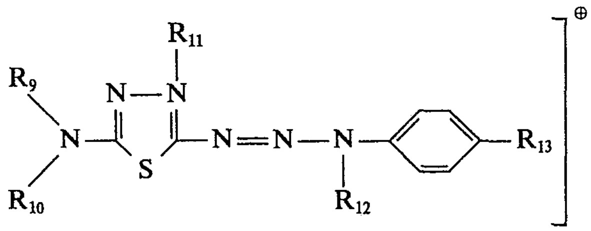
An$^{\ominus}$

wherein

$R_9$ denotes H $-CH_3$ $-C_2H_5$ $-C_3H_7$ iso-$C_3H_7$ $-C_4H_9$ iso-$C_4H_9$ sec.-$C_4H_9$ tert.-$C_4H_9$

$-CH_2-CH-C_4H_9$
|
$C_2H_5$

$-C_2H_4OH$ $-CH_2-CHOH-CH_3$ $-C_2H_4CN$ $-C_6H_{11}$ $-C_5H_9$ $-CH_2-C_6H_5$ $-C_6H_5$ $-C_6H_4Cl$ (p) $-C_6H_3Cl_2$ (2,5) $-C_6H_4-CH_3$ (o, m, p) $-C_6H_4-OCH_3$ (p) $-C_2H_4-O-CH_3$ $-C_2H_4-O-C_2H_5$ or

$CH_3-C-$
||
O

$R_{10}$ denotes H $-CH_3$ $-C_2H_5$ $-C_3H_7$ iso-$C_3H_7$ $-C_4H_9$ iso-$C_4H_9$ sec.-$C_4H_9$ tert.-$C_4H_9$

$-CH_2-CH-C_4H_9$
|
$C_2H_5$

$-C_2H_4OH$ $-CH_2-CHOH-CH_3$ $-C_2H_4CN$ $-C_6H_{11}$ $-C_5H_9$ $-CH_2-C_6H_5$ $-C_2H_4-O-CH_3$ or $-C_2H_4-O-C_2H_5$

$R_{11}$ and $R_{12}$ denote alkyl having 1—4 C atoms, 2-cyanoethyl, 2-carbamoylethyl, 2-hydroxyethyl or benzyl,

$R_{13}$ denotes H, methyl, ethyl, methoxy, ethoxy, fluorine, chlorine, bromine, methylsulphonyl, cyano, nitro, 6-methylbenzthiazol-2-yl, acetylamino or phenylazo, and

An$^{\ominus}$ denotes an anion.

4. Process for dyeing and printing natural and synthetic materials, particularly fibres composed of polyacrylonitrile and acid-modified polyesters and polyamides, characterised in that dyestuffs of claim 1 are used.

**Revendications**

1. Colorants triazéniques cationiques de formule générale

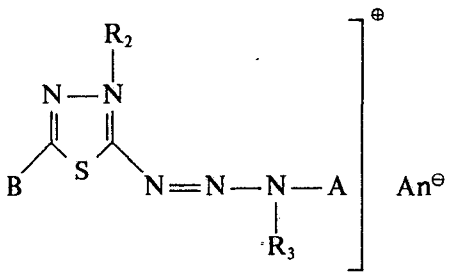

dans laquelle

B est un groupe alkylmercapto, arylmercapto ou un reste de formule

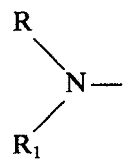

R désigne l'hydrogène, un reste alkyle, alcényle, acyle, cycloalkyle, aryle, aralkyle, amino, alkylamino, dialkylamino, arylamino, aralkylamino ou hétérocyclique et

$R_1$ désigne l'hydrogène, un reste alkyle, alcényle ou aralkyle, ou bien

R et $R_1$ sont liés en un hétérocycle,

$R_2$, $R_3$ désignent un reste alkyle, alcényle, alcynyle ou aralkyle ou bien l'un des restes $R_2$ ou $R_3$ désigne également l'hydrogène,

$R_3$ est lié à A en position ortho

A désigne un reste aryle et

$An^{\ominus}$ désigne un anion,

et les restes cycliques et acycliques peuvent comporter des substituants non ionogènes et/ou un groupe carboxyle.

2. Colorants triazéniques cationiques suivant la revendication 1, de formule

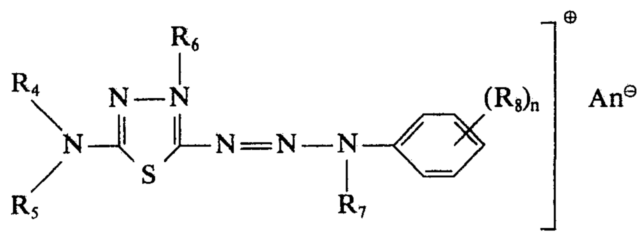

dans laquelle

$R_4$ désigne l'hydrogène, un reste alkyle en $C_1$ à $C_8$ éventuellement substitué par un radical hydroxy, halogéno, cyano, alkoxy en $C_1$ à $C_4$, carboxyle, aminocarbonyle ou (alkoxy en $C_1$ à $C_4$)carbonyle, un reste alcényle en $C_2$ à $C_4$, un reste cyclohexyle éventuellement substitué par un radical alkyle en $C_1$ à $C_4$, un reste phényle, benzyle ou phényléthyle éventuellement substitué par un halogène, un radical alkyle en $C_1$ à $C_4$ ou un radical alkoxy en $C_1$ à $C_4$, un reste (alkyloxy en $C_1$ à $C_4$)-carbonyle, mono- ou di(alkyle en $C_1$ à $C_4$)aminocarbonyle, aminocarbonyle, mono- ou di(alkyle en $C_1$ à $C_4$)-aminosulfonyle, amino, alkylamino en $C_1$ à $C_4$, di(alkyle en $C_1$ à $C_4$)amino, un reste phénylamino ou benzylamino éventuellement substitué par un radical alkyle en $C_1$ à $C_4$ ou alkoxy en $C_4$,

$R_5$ désigne l'hydrogène, un reste alkyle en $C_1$ à $C_8$ éventuellement substitué par un radical hydroxy, halogéno, cyano, alkoxy en $C_1$ à $C_4$, carboxyle, aminocarbonyle ou (alkoxy en $C_1$ à $C_4$)carbonyle, un reste alcényle en $C_2$ à $C_4$ ou un reste benzyle ou phényléthyle éventuellement substitué par un halogène, un radical alkyle en $C_1$ à $C_4$ ou un radical alkoxy en $C_1$ à $C_4$,

$R_6$, $R_7$ désignent un reste alkyle en $C_1$ à $C_8$ éventuellement substitué par un radical hydroxy, halogéno, cyano, alkoxy en $C_1$ à $C_4$, carboxyle, aminocarbonyle ou (alkoxy en $C_1$ à $C_4$)carbonyle, un reste alcényle en $C_2$ à $C_4$ ou un reste benzyle ou phényléthyle éventuellement substitué par un radical halogéno, alkyle en $C_1$ à $C_4$ ou alkoxy en $C_1$ à $C_4$, ou bien l'un des restes $R_6$ ou

$R_7$ peut aussi représenter l'hydrogène,

$R_8$ désigne l'hydrogène, un groupe alkyle en $C_1$ à $C_4$, alkoxy en $C_1$ à $C_4$, un halogène, un groupe nitro, cyano, alkylsulfonyle en $C_1$ à $C_4$, phénylsulfonyle, acétylamino, phénylazo, benzothiazolyle ou 1,2,4-oxdiazolyle, les restes cycliques mentionnés pouvant être substitués par un radical alkyle en $C_1$ à $C_4$ ou phényle,

$R_7$ pouvant être lié en position ortho au noyau benzénique et pouvant alors former conjointement avec le noyau benzénique et l'atome d'azote un noyau de dihydro-indole, de tétrahydroquinoléine, de tétrahydroquinoxaline ou de tétrahydro-1,4-benzoxazine éventuellement substitué par un radical alkyle en $C_1$ à $C_4$ ou alkoxy en $C_1$ à $C_4$,

n a une valeur de 0 à 3 et

$An^{\ominus}$ désigne un anion.

3. Colorants triazéniques cationiques suivant la revendication 1, de formule

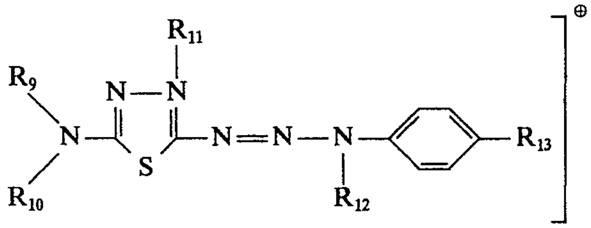 $An^{\ominus}$

dans laquelle

$R_9$ représente H $-CH_3$ $-C_2H_5$ $-C_3H_7$ iso-$C_3H_7$ $-C_4H_9$ iso-$C_4H_9$ sec.-$C_4H_9$ tertio.-$C_4H_9$

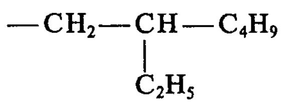

$-C_2H_4OH$ $-CH_2-CHOH-CH_3$ $-C_2H_4CN$ $-C_6H_{11}$ $-C_5H_9$

$-CH_2-C_6H_5$ $-C_6H_5$ $-C_6H_4Cl$ (p) $-C_6H_3Cl_2$ (2,5)

$-C_6H_4-CH_3$(o, m, p) $-C_6H_4-OCH_3$ (p) $-C_2H_4-O-CH_3$

$-C_2H_4-O-C_2H_5$

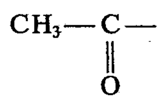

$R_{10}$ représente H $-CH_3$ $-C_2H_5$ $-C_3H_7$ iso-$C_3H_7$ $-C_4H_9$ iso-$C_4H_9$ sec.-$C_4H_9$ tertio.-$C_4H_9$

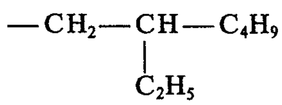

$-C_2H_4OH$ $-CH_2-CHOH-CH_3$ $-C_2H_4CN$ $-C_6H_{11}$ $-C_5H_9$

$-CH_2-C_6H_5$ $-C_2H_4-O-CH_3$ $-C_2H_4-O-C_2H_5$

$R_{11}$, $R_{12}$ représentent un groupe alkyle ayant 1 à 4 atomes de carbone, 2-cyanéthyle, 2-carbamoyléthyle, 2-hydroxyéthyle ou benzyle,

$R_{13}$ représente H, un groupe méthyle, éthyle, méthoxy, éthoxy, du fluor, du chlore, du brome, un groupe méthylsulfonyle, cyano, nitro, 6-méthylbenzothiazolyle-2, acétylamino, phénylazo, et

$An^{\ominus}$ désigne un anion.

4. Procédé de teinture et d'impression de matières naturelles et synthétiques, notamment de fibres de polyacrylonitrile et de polyesters et polyamides modifiés par un acide, caractérisé en ce qu'on utilise des colorants suivant la revendication 1.